# EUROPÄISCHE PATENTSCHRIFT

(11) **EP 1 487 662 B1**
(45) Veröffentlichungstag und Bekanntmachung des Hinweises auf die Patenterteilung: **04.07.2007**
(21) Anmeldenummer: 03724918.2
(22) Anmeldetag: 14.03.2003
(51) Int. Cl.: B60N 2/44

(54) **BETÄTIGUNGSHEBEL, INSBESONDERE ZUR VERSTELLUNG EINES FAHRZEUGSITZES**
ACTUATION LEVER, PARTICULARLY FOR ADJUSTING A VEHICLE SEAT
LEVIER D'ACTIONNEMENT SERVANT EN PARTICULIER A REGLER UN SIEGE DE VEHICULE

(30) Priorität: 15.03.2002 DE 10211662
(43) Veröffentlichungstag der Anmeldung: 22.12.2004
(73) Patentinhaber: Johnson Controls Interiors GmbH & Co. KG, 42285 Wuppertal (DE)
(72) Erfinder: WOLFF, Martin, 45529 Hattingen (DE); WERNER, Johann-Georg, 59071 Hamm (DE)
(74) Vertreter: Hemmelmann, Klaus
(86) Internationale Anmeldenummer: PCT/EP2003/002694
(87) Internationale Veröffentlichungsnummer: WO 2003/078202

(56) Entgegenhaltungen:
- EP-A- 0 748 963
- DE-A- 3 323 539
- FR-A- 2 750 185
- US-A- 3 833 965

## Beschreibung

Die Erfindung betrifft einen Betätigungshebel, insbesondere zur Verstellung eines Fahrzeugsitzes, mit einer Achsaufnahme, einer Anlenkeinrichtung zur Kraftabgabe und einem Griffstück.

### Stand der Technik

Gattungsgemäße Betätigungshebel sind aus der Praxis bekannt und dienen beispielsweise dazu, die Arretiereinrichtung eines Sitzlängs- oder Sitzhöhenverstellers zu lösen. Dabei schwenkt der Hebel beim Ziehen oder Drücken des Griffstücks um eine Drehachse und verlagert eine im Hebel befindliche Anlenkeinrichtung zur Kraftabgabe, insbesondere ein zur Aufnahme eines Bolzens geeignetes Auge. Dieses kann über ein Gestänge oder einen Bowdenzug mit der Arretiereinrichtung in Wirkzusammenhang stehen, so dass sich die durch Bedienung des Griffstücks bewirkte Verlagerung der Anlenkeinrichtung auf die Arretiereinrichtung überträgt und diese löst.

Derartige hochbelastete Betätigungshebel werden üblicherweise entweder aus einem gepreßten und gestanzten Stahlblech, gegebenenfalls in Verbindung mit einem aus Rundmaterial gebogenen und angeschweißten Griffstück, oder mittels Metall-Druckguß hergestellt.

Erstgenannte Hebel sind äußerst preiswert zu fertigen, können jedoch im Hinblick auf die Gestaltungsmöglichkeiten hohen Ansprüchen nicht genügen. Im Druckgußverfahren lassen sich zwar hochfeste Betätigungshebel mit komplexer Geometrie herstellen, die sich zur nochmaligen Verbesserung der Optik zusätzlich verchromen lassen, diese Hebel sind jedoch relativ schwer und neigen daher dazu, infolge ihrer Massenträgheit in einer Unfallsituation durch die auf sie wirkenden Beschleuigungskräfte ungewollt die Verstelleinrichtung zu lösen. Es ist daher notwendig, diese Betätigungshebel stets mit einer relativ hohen, der Löserichtung entgegengerichteten Federkraft zu beaufschlagen. Diese erschwert das gewollte Lösen und verteuert darüber hinaus den Hebelmechanismus.

Aus EP-A-748963 ist ein Betätigungshebel bekannt der einstückig aus Kunststoff gefertigt ist, und der eine Achsaufnahme, eine Anlenheinrichtung zur Kraftabgabe und ein Griffstück vorweist.

### Aufgabe

Der Erfindung liegt die Aufgabe zugrunde, einen leichten, hochfesten Betätigungshebel bereitzustellen, der hohen Anforderungen an die Formgestaltung und Oberflächenqualität gerecht wird.

### Lösung

Die Aufgabe wird erfindungsgemäß dadurch gelöst, dass ein die Achsaufnahme und die Anlenkeinrichtung umfassender Kern aus einem Werkstoff höherer Festigkeit gefertigt ist als das Griffstück.

Ein optisch besonders anspruchsvoller Betätigungshebel läßt sich dadurch ausbilden, dass der Werkstoff des Griffstücks den Kern aus höher festem Werkstoff im Wesentlichen umhüllt. Der Kern ist mit Vorteil aus einem faserverstärkten Kunststoff, insbesondere einem glasfaserverstärkten Styrol-Acryl-Nitril (SAN) gefertigt, während der Werkstoff des Griffstücks aus einem Polycarbonat-Compound, insbesondere einem unverstärkten Polycarbonat-Acryl-Butadien-Styrol (PC-ABS)-Compound besteht. Letztgenanntes Material läßt sich mit höher Oberflächenqualität verarbeiten, so dass es sich mit einer hochwertigen Chromschicht überziehen läßt.

Die Herstellung des erfindungsgemäßen Betätigungshebels erfolgt vorzugsweise durch Spritzgießen, insbesondere im Monosandwichverfahren. Dabei werden zwei Schmelzen zunächst nacheinander in einem gemeinsamen Schneckenzylinder geschichtet, wobei die zweite Schmelze über einen Nebenextruder in den Schneckenzylinder des Hauptaggregats plastifiziert wird. Der Einspritzvorgang erfolgt dann ähnlich dem herkömmlichen Spritzgießen mit nur einem einzigen Hub. Die Sandwichstrukturen entstehen durch die Strömungseigenschaften der axial geschichteten Schmelzen im Schneckenzylinder. Das zuerst eingespritzte Material legt sich dabei an die Wand der Werkzeugkavität, während der nachfolgend eingespritzte Werkstoff den Kern bildet.

### Figuren

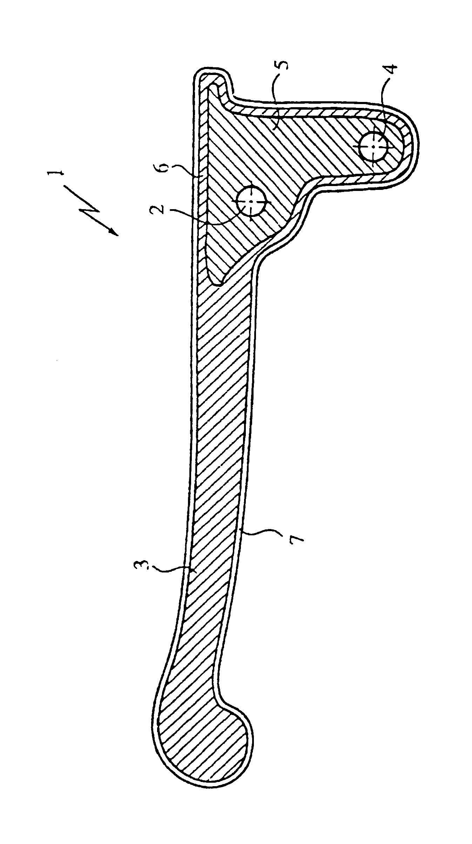

Die Figur stellt beispielhaft und schematisch den Längsschnitt durch eine Ausführung der Erfindung dar.

Der Betätigungshebel 1 ist mit einer Achsaufnahme 2 versehen, von der aus sich ein erster, ein Griffstück 3 bildender Hebelarm nach vorne und ein zweiter, mit einer Anlenkeinrichtung 4 in Form eines Auges ausgestatteter Hebelarm rechtwinklich zum ersten Hebelarm nach unten erstreckt. Die Länge des Griffstückes 3 ist dabei erheblich größer als der Abstand zwischen der Achsaufnahme 2 und der Anlenkeinrichtung 4, so dass die in das Griffstück endseitig eingebrachten Kräfte verstärkt werden. Der Bereich zwischen Achsaufnahme 2 und Anlenkeinrichtung 4 ist daher mechanisch wesentlich höher belastet als der übrige Teil des Betätigungshebels 1.

Um diesen Anforderungen gerecht zu werden, besteht der die Achsaufnahme 2 und die Anlenkeinrichtung 4 verbindende Kern 5 aus einem glasfaserverstärkten Styrol-Acryl-Nitril (SAN), das einen Glasfaseranteil von mindestens 20%, bevorzugt jedoch etwa 35% aufweist. Dieser Werkstoff besitzt auch bei einer Belastung unter einer vergleichsweise hohen Temperatur von 80°C eine erhebliche Festigkeit, aber nur eine unbefriedigende Oberfläche.

Der Kern 5 wird daher mit einer Umhüllung 6 aus dem Werkstoff des Griffstücks 3 versehen, das aus einem Acryl-Butadien-Styrol (PC-ABS)-Compound besteht. Dieses Material weist eine im Hinblick auf die im Griffstück 3 auftretenden Kräfte ausreichende Festigkeit auf, auch unter höheren Temperaturen, ermöglicht aufgrund seiner hohen Oberflächengüte jedoch das Aufbringen einer Chromschicht 7, die den Betätigungshebel vollständig umgibt. Erfahrungsgemäß zeichnen sich bereits geringe Unebenheiten des Untergrundes, beispielsweise Strukturen einer Faserverstärkung, in der Chromschicht 7 ab. Durch die Fertigung im Monosandwichverfahren wird ferner vermieden, dass die Werkzeugkavität während der Fertigung geöffnet wird. Die Oberflächenqualität des Betätigungshebels ist daher auch im Bereich der Trennkanten ausreichend gut, so dass eine Nachbearbeitung nicht erforderlich ist.

Der erfindungsgemäße Betätigungshebel läßt sich nicht nur zur Auslösung einer Sitzverstellung mit Vorteil einsetzen, sondern darüber hinaus auch überall in allen Anwendungsbereichen, in denen ein geringes Gewicht in Verbindung mit hochwertiger Optik gefordert wird, insbesondere bei der Ausstattung von Fahrzeuginnenräumen. So kann ein derartiger Betätigungshebel auch als innenraumseitiger Türöffner oder zum Öffnen von Handschuhfächern oder dergleichen Verwendung finden.

### Bezugszeichen

- 1: Betätigungshebel
- 2: Achsaufnahme
- 3: Griffstück
- 4: Anlenkeinrichtung
- 5: Kern
- 6: Umhüllung
- 7: Chromschicht

## Patentansprüche

1. Betätigungshebel (1), insbesondere zur Verstellung eines Fahrzeugsitzes, mit einer Achsaufnahme (2), einer Anlenkeinrichtung (4) zur Kraftabgabe und einem Griffstück (3), wobei der Betätigungshebel (1) einstückig aus Kunststoff gefertigt ist, **dadurch gekennzeichnet, daß** ein die Achsaufnahme (2) und die Anlenkeinrichtung (4) umfassender Kern (5) aus einem Werkstoff höherer Festigkeit gefertigt ist als das Griffstück (3).

2. Betätigungshebel nach Anspruch 1, **dadurch gekennzeichnet, dass** die Länge des Griffstücks (3) größer ist als der Abstand zwischen Achsaufnahme (2) und Anlenkeinrichtung (4).

3. Betätigungshebel nach Anspruch 1 oder 2, **dadurch gekennzeichnet, dass** der Werkstoff des Griffstücks (3) den Kern (5) aus höher festem Werkstoff im Wesentlichen umhüllt.

4. Bestätigungshebel nach einem der vorhergehenden Ansprüche, **dadurch gekennzeichnet, dass** der Kern (5) aus einem faserverstärkten Kunststoff, insbesondere einem glasfaserverstärkten Styrol-Acryl-Nitril (SAN) besteht.

5. Betätigungshebel nach einem der vorhergehenden Ansprüche, **dadurch gekennzeichnet, dass** der Werkstoff des Griffstücks (3) aus einem Polycarbonat-Compound, insbesondere einem unverstärkten Polycarbonat-Acryl-Butadien-Styrol (PC-ABS)-Compound besteht.

6. Betätigungshebel nach Anspruch 5, **dadurch gekennzeichnet, dass** der Werkstoff des Griffstücks (3) mit einer Chromschicht (7) überzogen ist.

7. Betätigungshebel nach einem der vorhergehenden Ansprüche, **dadurch gekennzeichnet, dass** er durch Spritzgießen, insbesondere im Monosandwichverfahren herstellbar ist.

## Claims

1. Actuation lever (1), particularly for adjusting a vehicle seat, with a spindle mount (2), a linking device (4) for delivering force, and a handle (3), the actuation lever (1) being manufactured as a single piece from plastic, **characterized in that** a core (5) encompassing the spindle mount (2) and the linking device (4) is manufactured from a material of higher strength than the handle (3).

2. Actuation lever according to Claim 1, **characterized in that** the length of the handle (3) is greater than the distance between spindle mount (2) and linking device (4).

3. Actuation lever according to Claim 1 or 2, **characterized in that** the material of the handle (3) essentially encases the core (5) of higher strength material.

4. Actuation lever according to one of the preceding claims, **characterized in that** the core (5) is composed of a fibre-reinforced plastic, in particular a glass-fibre-reinforced styrene-acrylonitrile (SAN).

5. Actuation lever according to one of the preceding claims, **characterized in that** the material of the handle (3) is composed of a polycarbonate compound, in particular a non-reinforced polycarbonate-acrylobutadiene-styrene (PC-ABS) compound.

6. Actuation lever according to Claim 5, **characterized in that** the material of the handle (3) is covered with a chrome layer (7).

7. Actuation lever according to one of the preceding claims, **characterized in that** it can be produced by injection moulding, in particular in the monosandwich method.

## Revendications

1. Levier d'actionnement (1), notamment pour régler un siège de véhicule, comprenant un logement d'axe (2), un dispositif d'articulation (4) devant exercer une force et une manette (3), le levier d'actionnement (1) étant réalisé d'une seule pièce en plastique, **caractérisé en ce qu'**un noyau (5) entourant le logement d'axe (2) et le dispositif d'articulation (4) est fabriqué en un matériau de plus grande résistance que la manette (3).

2. Levier d'actionnement selon la revendication 1, **caractérisé en ce que** la longueur de la manette (3) est plus grande que la distance entre le logement d'axe (2) et le dispositif d'articulation (4).

3. Levier d'actionnement selon la revendication 1 ou 2, **caractérisé en ce que** le matériau de la manette (3) enveloppe sensiblement le noyau (5) en matériau de plus grande résistance.

4. Levier d'actionnement selon l'une quelconque des revendications précédentes, **caractérisé en ce que** le noyau (5) se compose d'un plastique renforcé par des fibres, notamment d'un styrène-acrylonitrile (SAN) renforcé par des fibres de verre.

5. Levier d'actionnement selon l'une quelconque des revendications précédentes, **caractérisé en ce que** le matériau de la manette (3) se compose d'un composite de polycarbonate, notamment d'un composite polycarbonate-acrylobutadiène-styrène (PC-ABS) non renforcé.

6. Levier d'actionnement selon la revendication 5, **caractérisé en ce que** le matériau de la manette (3) est revêtu d'une couche de chrome (7).

7. Levier d'actionnement selon l'une quelconque des revendications précédentes, **caractérisé en ce qu'**il peut être fabriqué par moulage par injection, notamment dans un procédé monosandwich.
